# EUROPÄISCHE PATENTSCHRIFT

(11) **EP 3 839 186 B1**
(45) Veröffentlichungstag und Bekanntmachung des Hinweises auf die Patenterteilung: **07.08.2024**
(21) Anmeldenummer: 21151158.9
(22) Anmeldetag: 04.06.2018
(51) Int. Cl.: E05F 11/48, B60J 5/04

(54) **FENSTERHEBERBAUGRUPPE MIT SICHERUNGSELEMENT UND SICHERUNGSABSCHNITT FÜR DIE SICHERUNG EINES ZUGMITTELS**
WINDOW LIFTER ASSEMBLY WITH SECURING ELEMENT AND SECURING SECTION FOR SECURING A TRACTION MEANS
MODULE DE LÈVE-VITRE POURVU D'ÉLÉMENT DE FIXATION ET SECTION DE FIXATION POUR LA FIXATION D'UN MOYEN DE TIRAGE

(30) Priorität: 08.06.2017 DE 102017209719
(43) Veröffentlichungstag der Anmeldung: 23.06.2021
(62) Teilanmeldung aus: 18729390.7
(73) Patentinhaber: Brose Fahrzeugteile SE & Co. Kommanditgesellschaft, Bamberg, 96052 Bamberg (DE)
(72) Erfinder: EISENTRAUDT, Michael, 96342 Stockheim-Neukenroth (DE)
(74) Vertreter: Maikowski & Ninnemann Patentanwälte Partnerschaft mbB

(56) Entgegenhaltungen:
- DE-A1- 102005 041 636
- DE-U1- 202006 015 585
- DE-U1- 202015 104 588

## Beschreibung

Die Erfindung betrifft eine Fensterheberbaugruppe für einen zur Verstellung einer Fensterscheibe vorgesehenen Fensterheber.

Fensterheberbaugruppen für einen zur Verstellung einer Fensterscheibe vorgesehenen Fensterheber sind weithin bekannt, z.B. aus der DE 20 2006 015 585 U1, die für die Umlenkung eines flexiblen Zugmittels eine spezielle Seilumlenkrolle vorschlägt, die aus zwei verschiedenen Komponenten hegestellt ist. Eine weitere Fensterheberbaugruppe ist aus der DE 20 2015 104 588 U1 bekannt.

Andere bekannte Fensterheberbaugruppen umfassen üblicherweise unter anderem einen Träger, zum Beispiel in Form eines Aggregateträgers für eine Fahrzeugtür, sowie ein flexibles Zugmittel, zum Beispiel in Form eines Seilzuges, für die Übertragung einer Verstellkraft zur Verstellung der Fensterscheibe. Für die Umlenkung des Zugmittels in einer (Seil-) Führungsebene ist an dem Träger mindestens ein Umlenkstück nicht-drehbar angeordnet. Dieses üblicherweise starre Umlenkstück weist einen Führungskanal zur Umlenkung des Zugmittels auf und definiert durch seinen Verlauf die Führungsebene des Zugmittels. Das an dem Träger angeordnete Umlenkstück lenkt folglich im Betrieb des Fensterhebers einen in dem Führungskanal geführten Zugmittelabschnitt des flexiblen Zugmittels in eine vorgegebene Richtung um.

Im Fall eines Fensterhebers für ein Fahrzeug, der zum Anheben und Absenken einer Fensterscheibe mittels des flexiblen Zugmittels vorgesehen ist, steht das Zugmittel üblicherweise mit einem Verstellantrieb des Fensterhebers in Verbindung. Ein Antriebsmotor dieses Verstellantriebs dreht dann beispielsweise eine von dem flexiblen Zugmittel umschlungene Seiltrommel, um durch Drehung der Seiltrommel in die eine oder andere Drehrichtung die Fensterscheibe anzuheben oder abzusenken, an der wenigstens ein mit dem Zugmittel verbundener Mitnehmer befestigt ist.

Aus der DE 10 2005 041 636 A1 ist in diesem Zusammenhang beispielsweise eine Fensterheberbaugruppe mit einem starren Umlenkstück bekannt, das als separates Bauteil an einem Träger fixiert wird. Das Umlenkstück ist hierbei aus einer Montageposition in eine Funktionsposition an dem Träger überführbar, wobei beim Überführen in die Funktionsposition ein an dem Umlenkstück bereits geführtes flexibles Zugmittel gestrafft wird.

Der Erfindung liegt nun die Aufgabe zugrunde, eine solche Fensterheberbaugruppe weiter zu verbessern.

Diese Aufgabe wird mit einer Fensterheberbaugruppe nach Anspruch 1 gelöst.

Eine erfindungsgemäße Fensterheberbaugruppe sieht zum Halten des Zugmittels in dem Führungskanal des nicht-drehbaren und aus einem Polyarylether-Kunststoff bestehenden Umlenkstücks mindestens ein Sicherungselement an dem Träger und mindestens einen Sicherungsabschnitt, z.B. an dem Umlenkstück oder dem Träger, vor. Das mindestens eine Sicherungselement erstreckt sich in einer Raumrichtung, die im Wesentlichen senkrecht zur Führungsebene des Zugmittels verläuft, und liegt dem Führungskanal des Umlenkstücks gegenüber. Das mindestens eine Sicherungselement ist hierbei einem in dem Führungskanal aufgenommenen Zugmittelabschnitt des Zugmittels und damit einer offenen Seite des Führungskanals zugewandt. Der mindestens eine Sicherungsabschnitt steht ferner in einer Raumrichtung, die im Wesentlichen parallel zur Führungsebene des Zugmittels verläuft an einem Rand des Führungskanals vor, wobei das mindestens eine Sicherungselement und der mindestens eine Sicherungsabschnitt derart ausgebildet und zueinander angeordnet, insbesondere beabstandet sind, dass bei einem aus dem Führungskanal in Richtung des Sicherungselements verlagerten Zugmittelabschnitt und einer sich damit ergebenden Anlage des Zugmittels an dem Sicherungselement der Sicherungsabschnitt das Zugmittel weiterhin gegen eine Verlagerung quer zur Führungsebene aus dem Führungskanal heraus blockiert.

Das mindestens eine trägerseitige Sicherungselement und der mindestens eine Sicherungsabschnitt am Führungskanal des Umlenkstücks stellen somit im Zusammenspiel sicher, dass das Zugmittel mit dem in dem Führungskanal geführten Zugmittelabschnitt in jedem Fall in dem Führungskanal verbleibt und nicht hieraus unerwünscht verlagert werden kann. Insbesondere bei einer Lose in einem als Seilzug ausgebildeten Zugmittel, lässt sich damit sicherstellen, dass das Zugmittel gegen ein Entfernen aus dem Führungskanal gesichert ist. So kann in einem Entlastungszustand des flexiblen Zugmittels, in dem das Zugmittel im Unterschied zu einem Betrieb des Fensterhebers noch nicht oder nicht mehr straff gespannt ist, aufgrund seiner Eigensteifigkeit an dem Sicherungselement des Trägers zur Anlage kommen. Insbesondere die Relativlage des Sicherungselements bezüglich des Sicherungsabschnitts ist jedoch erfindungsgemäß so abgestimmt, dass bei einer solchen Anlage und der damit erfolgten Verlagerung eines Zugmittelabschnitts bezüglich des Führungskanals etwaige Querkräfte auf das Zugmittel durch den Sicherungsabschnitt weiterhin abgestützt werden können und damit das Zugmittel gegen ein Herausrutschen oder Herausspringen aus dem Führungskanal gesichert ist.

Aufgrund des Zusammenspiels zwischen trägerseitigem Sicherungselement und dem Sicherungsabschnitt können sowohl das Sicherungselement als auch der Sicherungsabschnitt kompakter bauen und unter Einsatz vergleichsweise geringen Materials ausgebildet sein. Dies ist insbesondere mit Blick auf das Umlenkstück von Vorteil, das mit Blick auf Verschleißarmut, Druckfestigkeit und Hochtemperaturbeständigkeit aus einem vergleichsweise teuren Hochleistungskunststoff mit sehr guten tribologischen Eigenschaften hergestellt werden kann. Kann das Umlenkstück gegebenenfalls mit dem hieran vorgesehenen Sicherungsabschnitt unter geringen Materialeinsatz ausgebildet werden, ohne die Sicherungsfunktion für das Zugmittel zu verschlechtern, lassen sich Kostenvorteile erzielen, da letztlich eine geringere Menge des teureren Hochleistungskunststoffes in Form des Polyarylether-Kunststoffs, insbesondere in Form von Polyetheretherketon (PEEK), verwendet werden muss.

In einer Ausführungsvariante sind das mindestens eine Sicherungselement und der mindestens eine Sicherungsabschnitt derart aufeinander und das Zugmittel, insbesondere dessen Durchmesser, abgestimmt, dass über das mindestens eine Sicherungselement und den mindestens einen Sicherungsabschnitt das flexible Zugmittel an einer Verlagerung aus dem Führungskanal heraus sowohl parallel zur Führungsebene als auch quer hierzu gehindert ist. Dabei steht das mindestens eine Sicherungselement des Trägers einer Verlagerung aus dem Führungskanal heraus vor allem parallel zur Führungsebene entgegen, während der randseitige Sicherungsabschnitt der Verlagerung aus dem Führungskanal heraus quer zur Führungsebene entgegen steht und damit etwaige Querkräfte auf das Zugmittel abstützt.

Zwischen dem mindestens einen Sicherungselement des Trägers und dem Umlenkstück kann ein Spalt vorhanden sein, durch den sich das (bereits bestimmungsgemäß an dem Träger angeordnete und verlegte) flexible Zugmittel in einem entspannten Entlastungszustand, der zu einem im Betrieb des Fensterhebers bestehenden gespannten respektive gestrafften Zustand des Zugmittels verschieden ist, hindurch erstreckt. Ein Zugmittelabschnitt des Zugmittels ist in dem entspannten Entlastungszustand durch das mindestens eine Sicherungselement in dem Spalt und durch das mindestens eine Sicherungselement in Kombination mit den mindestens einen Sicherungsabschnitt folglich weiterhin sicher in dem Führungskanal gehalten. In dieser Ausführungsvariante stellen somit das mindestens eine Sicherungselement und der mindestens eine Sicherungsabschnitt sicher, dass das Zugmittel auch in einem entspannten Entlastungszustand, in dem z.B. der Fensterheber (noch) nicht im Betrieb ist, das Zugmittel gegen ein Entfernen aus dem Führungskanal gesichert ist. Damit ist auch bei Lose im Zugmittel ein sicherer Verbleib des Zugmittels an dem Umlenkstück gegeben.

Der zwischen dem mindestens einen Sicherungselement und dem Umlenkstück vorhandene Spalt kann in einer Ausführungsvariante eine Breite aufweisen, die maximal dem Dreifachen eines mittleren Durchmessers des Zugmittels und wenigstens dem mittleren Durchmesser des Zugmittels entspricht. Insbesondere kann die Breite des Spaltes in einem Bereich von 1D bis 1,5D, insbesondere oder 1D bis 1,3D oder 1,1D bis 1,4D bei einem mittleren Durchmessers D des Zugmittels liegen. Der Spalt ist somit in seiner Breite so bemessen, dass das Zugmittel hierin eingelegt und ein Zugmittelabschnitt an sich quer zur Führungsebene aus dem Spalt entfernt werden kann. Durch die Wechselwirkung des Sicherungselements und des Sicherungsabschnitts kann jedoch ein solcher größerer, d.h., in seiner Breite mindestens den Durchmessers des Zugmittels entsprechender Spalt zugelassen werden, ohne dass hierdurch das Risiko besteht, dass das Zugmittels von dem Umlenkstück herunterrutscht oder herausspringt. Die Breite des Spaltes kann vielmehr wenigstens dem Durchmesser des Zugmittels entsprechen, wodurch dessen Montage an den Träger und an das Umlenkstück erleichtert ist.

In einem Ausführungsbeispiel weist der Führungskanal entlang seiner Erstreckung eine sich ändernde Tiefe auf. Die Führungskanaltiefe variiert z.B. bezogen auf einen mittleren Durchmesser D des Zugmittels zwischen 3D und 1D oder ist sogar kleiner als D. In einer Variante ist in wenigstens einem Abschnitt die Tiefe des Führungskanals geringer als ein mittlerer Durchmesser des hierin geführten Zugmittels respektive des hierin zugeführten Zugmittelabschnitts. In mindestens einem weiteren, durch den mindestens einen Sicherungsabschnitt berandeten Abschnitt ist die Tiefe des Führungskanals ferner größer als ein mittlerer Durchmesser des hierin geführten Zugmittels. Der Führungskanal kann hierbei dann über wenigstens die Hälfte seiner Erstreckung eine Tiefe aufweisen, die geringer ist als ein mittlerer Durchmesser des Zugmittels. An einem Großteil des Führungskanals steht somit ein hierin geführter Zugmittelabschnitt zumindest geringfügig über.

In einem Ausführungsbeispiel weist der Führungskanal einen bogenförmigen, insbesondere kreisbogenförmigen Verlauf auf. Auch kann das Umlenkstück, das den Führungskanal ausbildet, selbst bogenförmig ausgeführt sein.

In einer Ausführungsvariante ist das mindestens eine Sicherungselement des Trägers, bezogen auf eine Erstreckungsrichtung des Führungskanals, zu dem mindestens einen Sicherungsabschnitt versetzt. Das Sicherungselement und der Sicherungsabschnitt liegen sich somit nicht unmittelbar gegenüber. In einer Variante der Fensterheberbaugruppe sind an dem Träger mindestens zwei zueinander beabstandete, unterschiedlichen Bereichen des Führungskanals gegenüberliegende Sicherungselemente vorgesehen.

In einer Ausführungsvariante ist mindestens ein Sicherungsabschnitt an dem Umlenkstück vorgesehen.

In einer möglichen Weiterbildung können an dem Umlenkstück auch mindestens zwei zueinander beabstandete, unterschiedliche Bereiche des Führungskanals berandende Sicherungsabschnitte vorgesehen sein. Beispielsweise sind jeweils ein Sicherungsabschnitt und ein Sicherungselement einem von zwei Enden des Führungskanals zugeordnet, sodass jedem Ende des Führungskanals ein Paar aus Sicherungselement und Sicherungsabschnitt zugeordnet ist.

Alternativ oder ergänzend kann mindestens ein den Führungskanal berandender Sicherungsabschnitt ebenfalls am Träger vorgesehen sein, insbesondere hieran integriert oder als separates Bauteil befestigt sein. Dies schließt insbesondere eine Variante ein, bei der mindestens ein trägerseitiges Sicherungselement mit einem Sicherungsabschnitt an dem Umlenkstück und mindestens einem weiteren Sicherungsabschnitt an dem Träger kombiniert ist. Bei einem Sicherungsabschnitt, der durch ein separat an den Träger befestigtes und von dem Umlenkstück verschiedenes (Sicherungs-) Bauteil gebildet ist, kann dieses Bauteil in einer Weiterbildung der Fixierung des Umlenkstücks an dem Träger dienen, wenn das Umlenkstück ebenfalls als separates Bauteil ausgebildet ist. Das zusätzlich vorgesehene (Sicherungs-) Bauteil kann dabei beispielsweise am Träger angeschraubt, ein- oder angeklipst, heißverstemmt oder angeschweißt, insbesondere mittels Ultraschallschweißen fixiert sein.

So kann das Umlenkstück grundsätzlich als separates Bauteil ausgebildet und an dem Träger fixiert sein. Dies bietet sich insbesondere bei der Herstellung des Umlenkstücks und des Trägers aus verschiedenen Materialien an. So besteht das Umlenkstück erfindungsgemäß aus einem Material mit sehr guten tribologischen Eigenschaften, nämlich einem Polyarylether-Kunststoff, insbesondere PEEK, wohingegen der Träger, zum Beispiel ein Aggregateträger oder eine Führungsschiene, aus einem kostengünstigeren Metall- und/oder Kunststoffmaterial bestehen kann.

Für die Fixierung des Umlenkstücks an dem Träger können mehrere Formschlussbereiche an dem Träger vorgesehen sein. Ein solcher Formschlussbereich für die formschlüssige Verbindung zwischen Umlenkstück und Träger umfasst beispielsweise eine Nut, eine Öffnung oder eine - zum Beispiel taschenförmige - Vertiefung. In einen solchen Formschlussbereich kann ein Formschlusselement des Umlenkstücks bei der Montage der Fensterheberbaugruppe eingesteckt werden, um das Umlenkstück an dem Träger zu fixieren.

In einem Ausführungsbeispiel umfasst das Umlenkstück mindestens drei Formschlusselemente zur formschlüssigen Verbindung mit dem Träger. Beispielsweise sind mindestens zwei endseitige Formschlusselemente im Bereich jeweils eines Endes des Führungskanals vorgesehen. Mindestens ein weiteres (drittes) Formschlusselement ist dann entlang des Führungskanals zwischen den endseitigen Formschlusselementen vorgesehen. In einer hierauf basierenden Weiterbildung mit einem bogenförmigen Umlenkstück, das sich entlang eines Kreisbogens erstreckt, ist das mindestens eine zwischen den endseitigen Formschlusselementen vorgesehene (mittlere) Formschlusselement bezogen auf diesen Kreisbogen an dem Umlenkstück radial nach innen vorstehend ausgebildet. Das mittlere Formschlusselement weist somit z.B. eine Art Nase oder Steg für das Einstecken in einen Formschlussbereich, zum Beispiel eine Nut, an dem Träger auf. Über das Vorsehen dreier Formschlusselemente kann ferner grundsätzlich das Umlenkstück vergleichsweise einfach und verdrehsicher an dem Träger fixiert werden. Auch ist die Ausrichtung des Umlenkstücks bezüglich des Trägers eindeutig definiert, sodass eine Fehlmontage nahezu ausgeschlossen wird.

In einer alternativen Ausführungsvariante ist das separat hergestellte Umlenkstück zumindest teilweise in das Material des Trägers eingebettet. Hier erfolgt folglich eine Fixierung des Umlenkstücks an dem Träger durch Einlegen in das Material des Trägers respektive durch zumindest teilweises Umspritzen des Umlenkstücks. Beispielsweise wird ein Umlenkstück direkt bei der Herstellung des Trägers eingelegt und mit umspritzt, sodass kein nachträglicher Montagevorgang erforderlich ist und ein fester, spielfreier Sitz des Umlenkstücks an dem Träger gewährleistet ist.

In einem Ausführungsbeispiel ist das Umlenkstück zu einer parallel zur Führungsebene laufenden Achse symmetrisch ausgebildet, sodass das Umlenkstück auch um 180° um diese Achse gedreht an dem Träger bestimmungsgemäß anbringbar ist. Die (Symmetrie-) Achse kann hierbei insbesondere quer zur Erstreckungsrichtung des Führungskanals laufen. Die symmetrische Gestaltung des Umlenkstücks schließt hierbei insbesondere die symmetrische Ausbildung und Anordnung von Formschlusselementen des Umlenkstücks ein, die für die formschlüssige Verbindung mit dem Träger an dem Umlenkstück vorgesehen, insbesondere hieran ausgebildet sind. Durch die symmetrische Ausbildung des Umlenkstücks kann dieses an unterschiedlichen Positionen des Trägers, zum Beispiel an einem oberen und unteren Ende einer Führungsschiene, angebracht werden. Für die unterschiedlichen Umlenkstellen an dem Träger können somit identisch ausgebildete Umlenkstück verwendet werden.

Grundsätzlich kann mit einer erfindungsgemäßen Fensterheberbaugruppe ein Fensterheber zur Verstellung einer Fensterscheibe in einem Fahrzeug, insbesondere einem Kraftfahrzeug bereitgestellt werden wie auch ein Türmodul für eine Fahrzeugtür, in der eine mittels des Fensterhebers zu verstellende Fensterscheibe im geschlossenen Zustand eine Fensteröffnung in der Fahrzeugtür verschließt.

Die beigefügten Figuren veranschaulichen exemplarisch mögliche Ausführungsvarianten der vorgeschlagenen Lösung.

### Hierbei zeigen:

- Figuren 1A-1B: ausschnittsweise eine Ausführungsvariante einer erfindungsgemäßen Fensterheberbaugruppe mit einem Zugmittel in Form eines Seilzuges umgelenkt an einem Umlenkstück in einem gestrafften und damit gespannten Betriebszustand (Figur 1A) und in einem ungespannten Entlastungszustand (Figur 1B);
- Figur 2: in mit den Figuren 1A und 1B übereinstimmender Ansicht die Fensterheberbaugruppe ohne das Zugmittel;
- Figur 3A: einen Träger der Fensterheberbaugruppe der Figuren 1A bis 1B und 2 ohne das Umlenkstück;
- Figur 3B: einzelnen und perspektivisch das Umlenkstück der Fensterheberbaugruppe;
- Figur 4: eine weitere Ausführungsvariante einer erfindungsgemäßen Fensterheberbaugruppe ohne das an dem Umlenkstück umgelenkte Zugmittel;
- Figur 5: eine weitere Ausführungsvariante einer erfindungsgemäßen Fensterheberbaugruppe mit trägerseitig ausgebildeten Sicherungselementen und Sicherungsabschnitten;
- Figur 6: eine weitere Ausführungsvariante einer erfindungsgemäßen Fensterheberbaugruppe mit trägerseitig ausgebildeten Sicherungselementen und durch ein zusätzliches Sicherungsbauteil ausgebildeten Sicherungsabschnitten;
- Figur 7: eine schematische Darstellung einer Kraftfahrzeugtür mit einem Fensterheber.

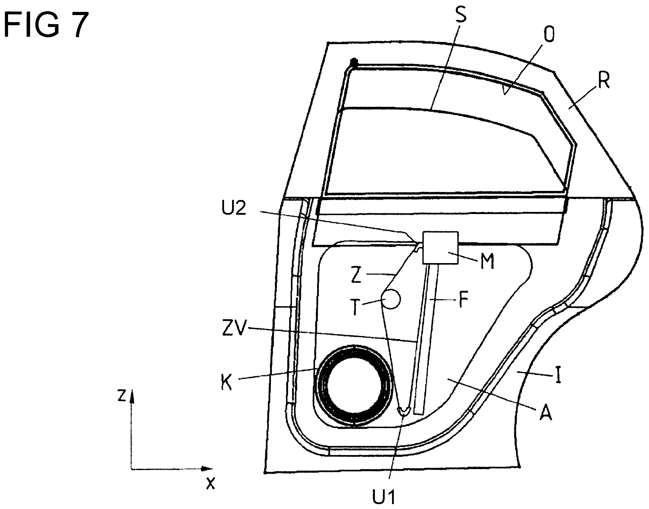

In der Figur 7 ist schematisch eine Kraftfahrzeugtür dargestellt, die einen eine Fensteröffnung O umschließenden Fensterrahmen R sowie eine unterhalb der Fensteröffnung O und des Fensterrahmens R angeordnete Türinnenhaut I umfasst. Die Türinnenhaut I weist einen großflächigen Ausschnitt auf, der mit einem Träger in Form eines Aggregateträgers A überdeckt ist. An diesem Aggregateträger A sind ein Fensterheber sowie weitere Türekomponenten K, wie zum Beispiel ein Lautsprecher, montiert. An dem Aggregateträger A können vor dessen Anordnung an der Türinnenhaut I der Fensterheber und die einzelnen Türenkomponenten K vormontiert und auf ihre Funktion vorprüfbar sein, bevor der Aggregateträger A als komplett vorgefertigtes und vorgeprüftes Türmodul an der Türinnenhaut I befestigt wird. Der Aggregateträger A besteht hierbei üblicherweise aus Kunststoff, kann jedoch auch aus Metall bestehen.

Der an dem Aggregateträger A montierte Fensterheber umfasst in bekannter Weise einen Verstellantrieb, der beispielsweise durch einen Motor oder manuell durch eine Kurbel angetrieben werden kann und der dazu dient, eine Drehbewegung einer Seiltrommel T um eine Drehachse zu erzeugen. Um die Seiltrommel T ist hierbei ein längserstrecktes, flexibles Zugmittel in Form eines Seilzuges Z geschlungen. Der Seilzug Z wird bei einer Drehung der Seiltrommel T - je nach Drehrichtung - in die eine oder andere Richtung entlang seiner Längserstreckung bewegt. Der flexible Seilzug Z ist mittels zweier (unterer und oberer) Umlenkelemente U1, U2 derart an dem Aggregateträger A umgelenkt, dass ein Verstellabschnitt ZV des Seilzuges Z parallel zu einer Führungsschiene F an dem Aggregateträger A verläuft, an dieser Führungsschiene F ist ein Mitnehmer M längsverschieblich gelagert, der einerseits (zum Beispiel über einen Seilnippel) mit dem Seilzug Z verbunden ist und der andererseits eine zu verstellende Fensterscheibe S trägt. Mit der Fensterscheibe S ist hierbei die durch den Fensterrahmen R definierte Fensteröffnung O verschließbar. Im Betrieb des Fensterhebers, also bei einer Drehbewegung der Seiltrommel T, wird der Verstellabschnitt ZV entlang der Führungsschiene F bewegt, sodass der mit dem Verstellabschnitt ZV des Seilzuges Z verbundene Mitnehmer M entlang der Führungsschiene F angehoben oder abgesenkt wird und hierbei die am Mitnehmer M angebundene Fensterscheibe S mitnimmt.

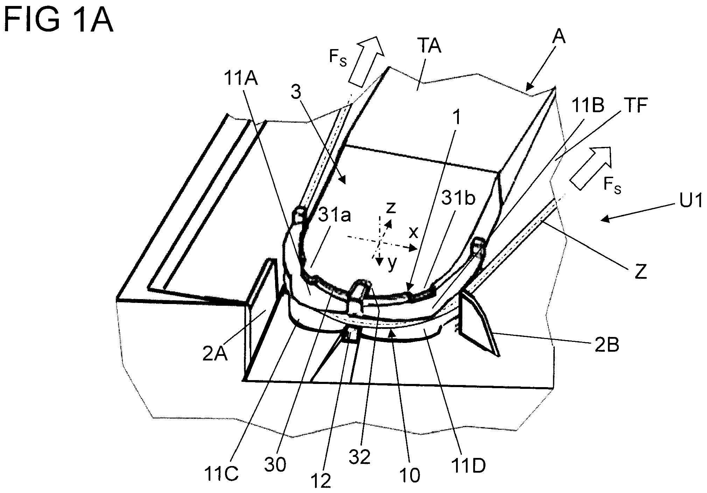

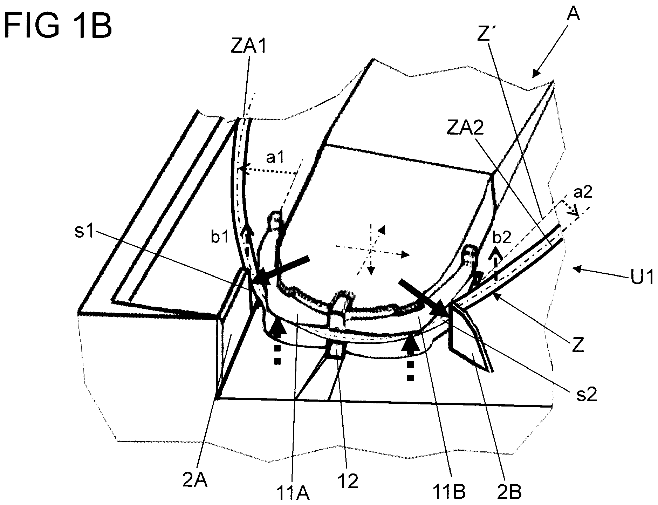

Die Figuren 1A und 1B zeigen ausschnittsweise den Fensterheber der Figur 7 mit Blick auf eines der Umlenkelemente U1, U2, hier des untere Umlenkelement U1. Dieses Umlenkelement U1 ist durch ein an dem Aggregateträger A nicht-drehbar fixiertes Umlenkstück 1 definiert. Das Umlenkstück 1 weist einen bogenförmigen Verlauf auf und bildet einen bogenförmigen Führungskanal 10 aus, um den hierin geführten Seilzug Z in eine vorgegebene Richtung umzulenken. Das Umlenkstück 1 ist hierbei an einem Befestigungsabschnitt 3 des Aggregateträgers A angeordnet. Dieser Befestigungsabschnitt bildet ein abgerundetes, konvex gewölbtes Ende eines von einer Trägerfläche TF des Aggregateträgers A erhaben vorstehenden Trägerabschnitts TA des Aggregateträgers A.

Die Figur 1A zeigt den Seilzug Z in einem gestrafften und gespannten Zustand, wenn der Fensterheber bestimmungsgemäß montiert und im Betrieb ist. Hier wirkt auf den Seilzug Z eine Seilkraft F_{S}, die den sich in einer Seilführungsebene (xz-Ebene) erstreckenden Seilzug Z in den Führungskanal 10 des Umlenkstücks 1 zieht.

Bei einem in der Figur 1B dargestellten entspannten Entlastungszustand des Seilzuges Z ist der Seilzug Z nicht mehr ganz so straff und auch die Anlage des Seilzuges Z an dem Umlenkstück 1 ist im Vergleich zum Betriebszustand der Figur 1A weniger eng. Der in der Figur 1B dargestellte entspannte Zustand des Seilzuges Z kann vor allem während der Montage des Fensterhebers auftreten oder grundsätzlich bei einer Lose im Seilzug Z entstehen. Im Vergleich zu dem gespannten Zustand, der in der Figur 1B anhand einer gestrichelten Linie dargestellt und mit Z' bezeichnet ist, haben sich von dem Umlenkstück 1 weg erstreckende Seilzugabschnitte ZA1 und ZA2 aufgrund der Eigensteifigkeit des Seilzuges Z von dem Trägerabschnitt TA weg verlagert. Sie weisen einen größeren seitlichen Abstand a1, a2 zu dem Trägerabschnitt TA auf. Hierbei besteht dann ein erhöhtes Risiko, insbesondere bei etwaigen Erschütterungen, dass der Seilzug Z unerwünscht aus dem Führungskanal 10 des Umlenkstücks 1 herausrutscht oder herausspringt. Eine Gefahr besteht hierbei einerseits durch eine Verlagerung des Seilzuges Z nach unten in der Seilführungsebene, sodass der Seilzug Z in eine Raumrichtung -z aus dem Führungskanal 10 heraus verlagert wird. Andererseits können in einer Raumrichtung -y quer zur Seilführungsebene Querkräfte wirken, die ebenfalls grundsätzlich zu einer Verlagerung des Seilzuges Z aus dem Führungskanal 10 führen können. Beide Risiken sind jedoch bei der dargestellten Ausführungsvariante mit vergleichsweise geringem Materialeinsatz und weiterhin gegebener einfacher und schneller Montierbarkeit der Fensterheberbaugruppe mittels der trägerseitigen Sicherungselemente 2A, 2B und der an dem Umlenkstück 1 vorgesehene Sicherungsabschnitte 11A, 11B erheblich reduziert oder gänzlich vermieden.

Die Sicherungsabschnitte des Aggregateträgers A sind dabei als Sicherungsstege 2A, 2B ausgeführt. Diese Sicherungsstege 2A, 2B stehen jeweils erhaben von der Trägerfläche TF in Raumrichtung -y und damit quer zur Seilführungsebene (xz-Ebene) hervor und liegen dem Führungskanal 10 des an dem Aggregateträger A montierten Umlenkstücks 1 gegenüber. Jeder Sicherungssteg 2A, 2B ist einem Ende des Führungskanals 10 zugeordnet und verhindert eine Verlagerung eines sich von dem Führungskanal 10 weg erstreckenden Seilzugabschnittes ZA1 oder ZA2 quer zur Längserstreckung des Seilzuges Z über ein zugelassenes Maß hinaus. Dementsprechend liegen die Seilzugabschnitte ZA1 und ZA2 in dem in der Figur 1B dargestellten entspannten Zustand des Seilzuges Z jeweils an einem der Sicherungsstege 2A, 2B an. Liegt ein Seilzugabschnitt ZA1 oder ZA2 an dem Sicherungssteg 2A oder 2B an, erstreckt sich dieser Seilzugabschnitt ZA1, ZA2 durch einen Spalt s1 oder s2, der zwischen dem Umlenkstück 1 und einem trägerseitigen Sicherungssteg 2A oder 2B vorhanden ist. Jeder Seilzugabschnitt ZA1 oder ZA2 kann sich somit in der Seilführungsebene von dem Umlenkstück 1 weg verlagern, jedoch nur bis zur Anlage an dem jeweiligen Sicherungssteg 2A oder 2B und damit Verbleib in dem definierten Spalt s1 oder s2.

Für die zusätzliche Sicherung des Zugseiles Z an dem Führungskanal 10 sind die an dem Umlenkstück 1 als Sicherungslaschen 11A, 11B ausgebildeten Sicherungsabschnitte vorgesehen. Diese Sicherungslaschen 11A und 11B beranden jeweils den Führungskanal 10 und stehen in Raumrichtung -z und damit quer zur Längserstreckungsrichtung des in dem Führungskanal 10 geführten Seilzugabschnittes, im Wesentlich aber parallel zur Seilführungsebene vor. Hierdurch stützt jede Sicherungslasche 11A, 11B den in dem Führungskanal 10 geführten Seilzugabschnitt bei auftretenden Querkräften ab und verhindert ein Herausrutschen des Seilzuges aus dem Führungskanal 10 des Umlenkstücks 1 infolge einer in der Figur 1B dargestellten Auslenkung b1 oder b2 quer zur Seilführungsebene. Um den Seilzug Z auch in dem entspannten Zustand des Seilzuges Z an dem Führungskanal 10 zu halten, stützen somit die Sicherungsstege 2A und 2B den Seilzug Z in der Seilführungsebene und die Sicherungslaschen 11A und 11B des Umlenkstücks 1 den Seilzug Z quer zur Seilführungsebene.

Die trägerseitigen Sicherungsstege 2A und 2B und die Sicherungslaschen 11A und 11B des Umlenkstücks 1 sind vorliegend derart aufeinander und den Durchmesser des Seilzuges Z abgestimmt und derart relativ zueinander angeordnet, dass auch bei aus dem Führungskanal 10 in Richtung der Sicherungsstege 2A, 2B verlagerten Zugmittelabschnitten ZA1 und ZA2 und einer sich damit ergebenden Anlage des Zugmittels Z an den Sicherungsstegen 2A und 2B die Sicherungslaschen 11 A und 11 B des Umlenkstücks 1 das Zugmittel Z weiterhin gegen eine Verlagerung quer zur Seilführungsebene aus dem Führungskanal 10 heraus blockieren. Die Zugmittelabschnitte ZA1 und ZA2 sind dabei in dem jeweiligen Spalt s1 oder s2 gehalten wie auch weiterhin an dem Führungskanal 10. Dabei kann die Breite des Spalte s1, s2 zwischen einem Sicherungssteg 2A oder 2B und dem Umlenkstück 1 größer als der Durchmesser des Seilzuges Z sein, wodurch das Einlegen des Seilzuges Z in den Führungskanal 10 bei der Montage erleichtert ist. Auch müssen die vorstehenden Sicherungslaschen 11A und 11B nicht übermäßig vorstehen und insbesondere den Führungskanal 10 lokal nicht um ein Vielfaches des Durchmessers des Seilzuges Z vertiefen, was im Hinblick auf eine Herstellung des Umlenkstücks 1 aus einem vergleichsweise teuren Material, wie zum Beispiel PEEK, Kostenvorteile mit sich bringt. Gerade die Kombination aus trägerseitigen Sicherungsstegen 2A, 2B und den Führungskanal berandenden und lokal vertiefenden Sicherungslaschen 11A, 11B am Umlenkstück 1 ermöglicht das sichere Halten des Seilzuges Z an dem Führungskanal (insbesondere im ungespannten Zustand des Seilzuges Z) bei gleichzeitiger guter Montierbarkeit des Seilzuges Z und vergleichsweise geringen Kosten. Von Vorteil ist in diesem Zusammenhang auch die einfache Werkzeugtechnik bei der Herstellung des Führungskanals ohne Schieber und ohne Werkzeugtrennung. Im Kontaktbereich zum Seilzug Z sind keine Trennlinien (Trenngrate) oder auch Absätze (Kanten) vorhanden, die im Betrieb des Fensterhebers zu Geräuschen führen könnten.

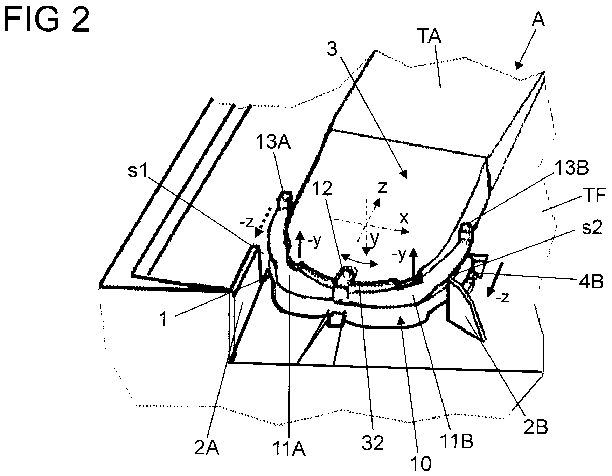

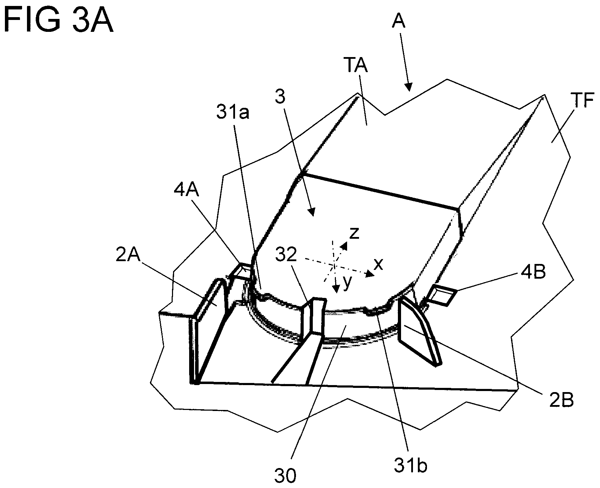

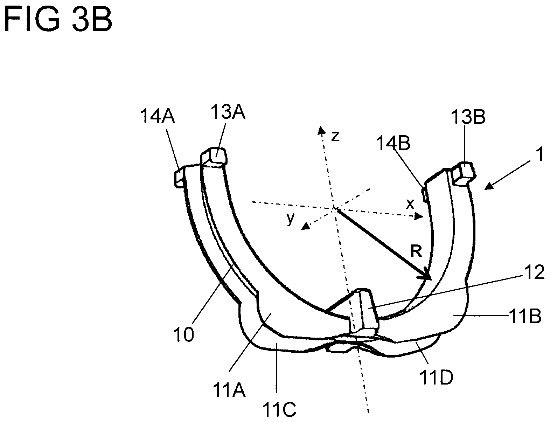

Das kreisbogenförmige Umlenkstück 1 kann grundsätzlich werkzeuglos an den Befestigungsabschnitt 3 des Aggregateträgers A montierbar und hieran formschlüssig fixierbar sein, wie dies anhand der Figuren 2, 3A und 3B näher veranschaulicht ist.

So bildet das Umlenkstück 1 an seinen Enden jeweils Formschlusselemente in Form von Fixierungszapfen oder -stegen 13A, 13B, 14A, 14B aus. Diese Formschlusselemente 13A, 13B, 14A, 14B können in Formschlussbereiche am Aggregateträger A eingesteckt werden und hierin eintauchen. Vorliegend sind hierfür in der Trägerfläche TF Formschlussbereiche in Form von Fixierungsöffnungen 4A, 4B beiderseits des Befestigungsabschnitts 3 ausgebildet. In diese Fixierungsöffnungen 4A, 4B (oder eine vergleichbare, zum Beispiel taschenförmige Aussparung) wird je ein Fixierungssteg 14A, 14B für die Fixierung des Umlenkstücks 1 an dem Aggregateträger A eingesteckt.

Für die weitere Fixierung und insbesondere Verdrehsicherung des Umlenkstücks 1 an den Befestigungsabschnitt 3 weist das Umlenkstück 1 ferner mittig mindestens ein weiteres Formschlusselement in Form eines radial nach innen vorstehenden Mittelsteges 12 auf. Dieser zwischen den endseitigen Formschlusselementen 13A, 14A und 13B, 14B liegende Mittelsteg 12 ist im montierten Zustand des Umlenkstücks 1 in einen Formschlussbereich in Form einer Nut 32 des Befestigungsabschnitt 3 eingesteckt. Die Nut 32 verläuft dabei quer zur Seilführungsebene in einer Anlagefläche 30 des Befestigungsabschnitts 3, an der das bogenförmige Umlenkstück 1 mit einer radial innen liegenden Innenseite an dem Befestigungsabschnitt 3 anliegt, wenn das Umlenkstück 1 bestimmungsgemäß fixiert ist. Ein Radius R für die kreisbogenförmige Kontur des Umlenkstücks 1 ist folglich identisch zu einem Radius für die konvexe, kreisbogenförmige Wölbung am oberen Ende des Befestigungsabschnitts 3.

Zur zusätzlichen Sicherung des an den Befestigungsabschnitt 3 montierten Umlenkstücks 1 bildet der Befestigungsabschnitt 3 mehrere (mindestens zwei) parallel zur Seilführungsebene vorspringende Haltelaschen 31a und 31b aus. Diese Haltelaschen 31a und 31b übergreifen einen Rand des montierten Umlenkstücks 1 und wirken damit einer Verlagerung des Umlenkstücks 1 quer zur Seilführungsebene in Raumrichtung -y entgegen. Das an den Befestigungsabschnitt 3 und hierüber an den Aggregateträger A gesteckte Umlenkstück 1 ist damit formschlüssig und verdrehsicher an dem Aggregateträger A gehalten.

Das Umlenkstück 1 ist ferner achssymmetrisch ausgebildet, sodass es zur Bildung des Umlenkelements U1 (oder U2) auch um 180° gedreht an dem Aggregateträger A montierbar ist. So befinden sich an dem jeweiligen Ende des Umlenkstücks 1 und seines Führungskanals 10 jeweils zwei Fixierungsstege 13A/14A und 13B/14B, die in entgegengesetzte Richtungen vorstehen. Ferner liegt jeder Sicherungslasche 11A oder 11B eine zusätzliche Sicherungslasche 11 C oder 1 D gegenüber, die bei einer um 180° gedrehten Anbringung des Umlenkstücks 1 die Abstützung des in dem Führungskanal 10 geführten Seilzugabschnittes quer zur Längserstreckungsrichtung und quer zur Seilführungsebene sichergestellt.

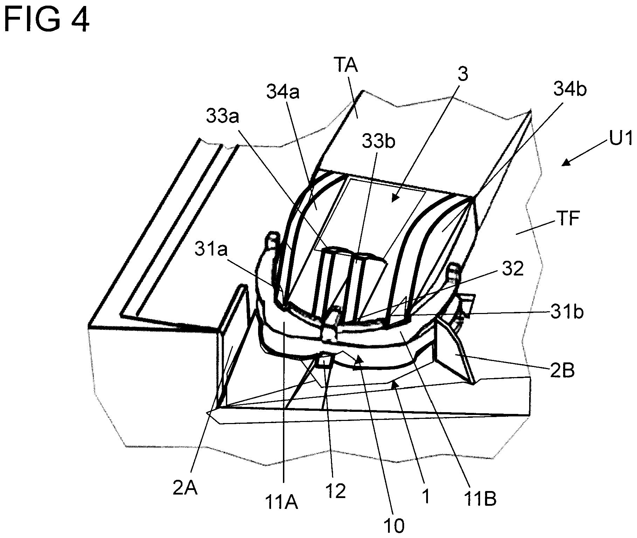

Bei der in der Figur 4 dargestellten Weiterbildung ist das Umlenkstück 1 zu der Ausführungsvariante der Figuren 1A bis 3B identisch ausgebildet. Am Befestigungsabschnitt 3 des Aggregateträgers 3 sind jedoch paarweise zusätzliche Führungsrippen 33a, 33b und 34a, 34b ausgebildet. So kann das Umlenkstück 1 analog zu einem Umlenkstück der DE 10 2005 041 636 A1 auch bereits mit einem hieran bereits eingelegten Zugmittel Z an den Aggregateträger A montierbar sein, wobei das Umlenkstück 1 zunächst in einer Montageposition an dem Aggregateträger A positioniert und dann (um eine parallel zur x-Richtung verlaufende Schwenkachse) in die in den Figuren 1A, 1B und 4 dargestellte Funktionsposition - manuell oder mittels eines Werkzeugs, zum Beispiel eines Spannhebels - geschwenkt wird. Zur Führung des Umlenkstücks 1 bei dieser Schwenkbewegung können die (äußeren) konvex gewölbten Führungsrippen 34a und 34b des Befestigungsabschnitts 3 der Figur 4 dienen. Das zwischen diesen äußeren Führungsrippen 34a und 34b vorgesehene Paar (mittlerer) Führungsrippen 33a und 33b kann wiederum der Führung des Mittelsteges 12 des Umlenkstücks 1 dienen. So bilden die innenliegenden, mittleren Führungsrippen 33a und 33b zwischen sich einen Führungsspalt aus, in den der Mittelsteg 12 des Umlenkstücks 1 eintauchen und an den mittleren Führungsrippen 33a und 33b entlang bis zu der Nut 32 an dem Befestigungsabschnitt 3 geführt werden kann.

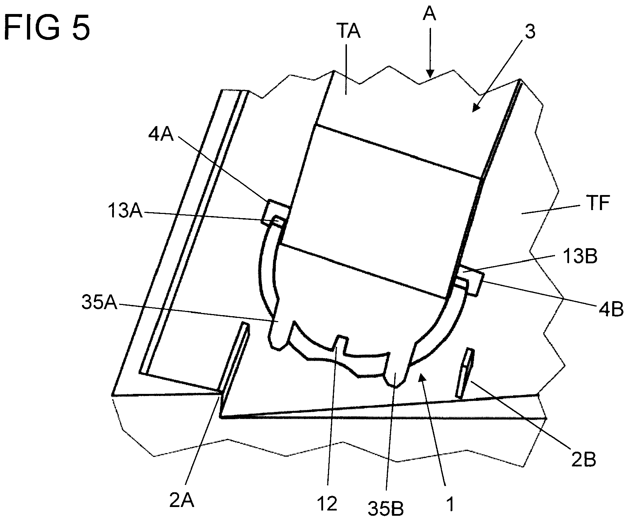

Bei der Variante der Figur 5 sind im Unterschied zu den vorstehend erörterten Ausführungsvarianten am Rand des Führungskanals 10 parallel zur xz-Ebene vorstehende Sicherungslaschen 35A und 35B nicht an dem Umlenkstück 1 vorgesehen, sondern durch den Aggregateträger A an dem Befestigungsabschnitt 3 selbst ausgebildet. Bei bestimmungsgemäßer Fixierung des Umlenkstücks 1 an dem Befestigungsabschnitt 3 stehen die Sicherungsabschnitte 35A und 35B des Aggregateträgers A über einen durch das Umlenkstück 1 ausgebildeten Rand des Führungskanals 10 vor und verhindern damit im Zusammenspiel mit den trägerseitigen Sicherungsstegen 2A und 2B das Entfernen des Seilzugs Z aus dem Führungskanal 10 auch bei einer Seillose.

Die an dem Aggregateträger A ausgebildeten Sicherungsabschnitte 35A und 35B der Ausführungsvariante der Figur 5 sind vorliegend stegartig vorspringend ausgebildet, jedoch auf die dargestellte Formgebung nicht festgelegt. Durch die Integration der Sicherungsabschnitte 35A und 35B am Aggregateträger A und damit am Träger der Fensterheberbaugruppe selbst ist die Ausbildung der Sicherungsabschnitte 35A und 35 B aus dem gegenüber dem Material des Umlenkstücks 1 kostengünstigeren Material des Aggregateträgers A möglich.

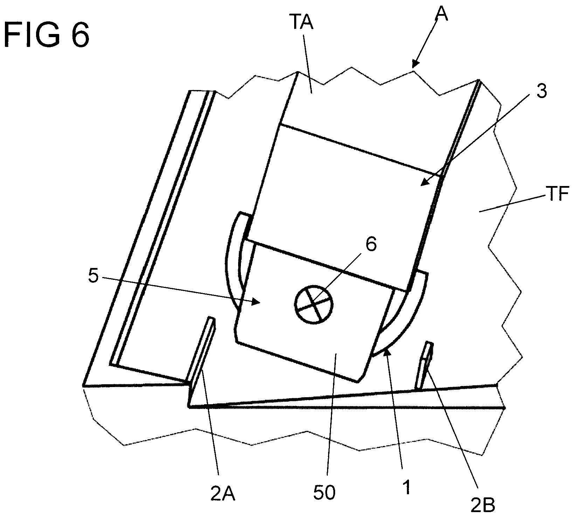

Bei der Ausführungsvariante der Figur 6 wird ein Sicherungsabschnitt 50 zur randseitigen Berandung des Führungskanals 10 und die damit verbundene Abstützung etwaiger Querkräfte in -y-Richtung durch ein separates Sicherungsbauteil 5 bereitgestellt. Dieses Sicherungsbauteil 5 ist über ein Befestigungselement 6, zum Beispiel eine Schraube, einen Niet oder einen Bolzen, an dem Aggregateträger A im Bereich des Befestigungsabschnitts 3 als separates Bauteil fixiert. Abweichend von der Darstellung der Figur 6 kann das Sicherungsbauteil 5 auch an den Aggregateträger A geklipst, heißverstemmt oder ultraschallgeschweißt sein.

Im bestimmungsgemäß montierten Zustand überragt das Sicherungsbauteil 5 mit seinem Sicherungsabschnitt 50 dem Führungskanal 10 und steht parallel zur xz-Ebene in -z-Richtung (nach unten) vor. Derart wirkt der Sicherungsabschnitt 50 einer Verlagerung des in dem Führungskanal 10 befindlichen Seilzugabschnitts aufgrund hieran angreifender Querkräfte in -y-Richtung entgegen.

Darüber hinaus kann das Sicherungsbauteil 5 der Fixierung des an den Befestigungsabschnitt 3 angebrachten Umlenkstücks 1 dienen. Indem wenigstens ein Teil des Umlenkstücks 1, insbesondere ein mittlerer Teil mit dem Mittelsteg 12, zwischen der Trägerfläche TF und dem Sicherungsbauteil 5 aufgenommen ist, kann das Sicherungsbauteil 5 die Position des an dem Aggregateträger A angeordneten Umlenkstücks 1 formschlüssig und/oder kraftschlüssig sichern. Das Vorsehen des zusätzlichen Sicherungsbauteils 5 vermeidet dabei zum Beispiel für die Sicherung des Umlenkstücks 1 an dem Befestigungsabschnitt 3 die Ausbildung von Haltenasen 31a und 31b an dem Befestigungsabschnitt 3 entsprechend den Ausführungsvarianten der Figuren 1A bis 3B und 4.

### Bezugszeichenliste

- 1: Umlenkstück
- 10: Führungskanal
- 11A - 11D: Sicherungslasche (Sicherungsabschnitt)
- 12: Mittelsteg (Formschlusselement)
- 13A, 13B: Fixierungssteg (Formschlusselement)
- 14A, 14B: Fixierungssteg (Formschlusselement)
- 2A, 2B: Sicherungssteg (Sicherungselement)
- 3: Befestigungsabschnitt
- 30: Anlagefläche
- 31a, 31b: Haltelasche
- 32: Nut (Formschlussbereich)
- 33a, 33b: Mittlere Führungsrippe
- 34a, 34b: Äußere Führungsrippe
- 35A, 35B: Sicherungslasche (Sicherungsabschnitt)
- 4A, 4B: Fixierungsöffnung (Formschlussbereich)
- 5: Sicherungsbauteil
- 50: Sicherungsabschnitt
- 6: Befestigungselement
- A: Aggregateträger (Träger)
- a1, a2: Abstand
- b1, b2: Auslenkung
- F: Führungsschiene
- F_{S}: Seilkraft
- I: Türinnenhaut
- K: Türkomponente
- M: Mitnehmer
- O: Fensteröffnung
- R: Fensterrahmen
- S: Fensterscheibe
- s1, s2: Spalt
- T: Seiltrommel
- TA: Trägerabschnitt
- TF: Trägerfläche
- U1, U2: Umlenkelement
- Z, Z`: Seilzug (Zugmittel)
- ZA1, ZA2: Seilzugabschnitt (Zugmittelabschnitt)
- ZV: Verstellabschnitt

## Patentansprüche

1. Fensterheberbaugruppe für einen zur Verstellung einer Fensterscheibe (S) vorgesehenen Fensterheber, mit
- einem Träger (A),
- einem flexiblen Zugmittel (Z, Z`) für die Übertragung einer Verstellkraft zur Verstellung der Fensterscheibe (S) und
- einem Umlenkstück (1), das an dem Träger (A) nicht-drehbar angeordnet ist und einen Führungskanal (10) zur Umlenkung des Zugmittels (Z, Z`) in einer Führungsebene (xz-Ebene) aufweist,
wobei,
- das Umlenkstück (1) aus einem Polyarylether-Kunststoff besteht und
- zum Halten des Zugmittels (Z, Z`) in dem Führungskanal (10) mindestens ein Sicherungselement (2A, 2B) an dem Träger (A) und mindestens ein Sicherungsabschnitt (11A, 11B; 35A, 35B; 50) vorgesehen sind, wobei
- sich das mindestens eine Sicherungselement (2A, 2B) in einer Raumrichtung (-y), die im Wesentlichen senkrecht zur Führungsebene (xz-Ebene) verläuft, erstreckt und dem Führungskanal (10) des Umlenkstücks (1) gegenüberliegt,
- der mindestens eine Sicherungsabschnitt (11A, 11B; 35A, 35B; 50) in einer Raumrichtung (-z), die im Wesentlichen parallel zur Führungsebene (xz-Ebene) verläuft, an einem Rand des Führungskanals (10) vorsteht, und
- das mindestens eine Sicherungselement (2A, 2B) und der mindestens eine Sicherungsabschnitt (11A, 11B; 35A, 35B; 50) derart ausgebildet und zueinander angeordnet sind, dass bei aus dem Führungskanal (10) in Richtung des Sicherungselements (2A, 2B) verlagerter Zugmittelabschnitte (ZA1, ZA2) des Zugmittels (Z, Z') und einer sich damit ergebenden Anlage des Zugmittels (Z, Z`) an dem Sicherungselement (2A, 2B) der Sicherungsabschnitt (11A, 11B; 35A, 35B; 50) das Zugmittel (Z, Z`) weiterhin gegen eine Verlagerung quer zur Führungsebene (xz-Ebene) aus dem Führungskanal (10) heraus blockiert.

2. Fensterheberbaugruppe nach Anspruch 1, **dadurch gekennzeichnet, dass** das Umlenkstück (1) aus PEEK besteht.

3. Fensterheberbaugruppe nach Anspruch 1 oder 2, **dadurch gekennzeichnet, dass** das mindestens eine Sicherungselement (2A, 2B) und der mindestens eine Sicherungsabschnitt (11A, 11B; 35A, 35B; 50) derart aufeinander und das Zugmittel (Z, Z`) abgestimmt sind, dass über das mindestens eine Sicherungselement (2A, 2B) und den mindestens einen Sicherungsabschnitt (11A, 11B; 35A, 35B; 50) das Zugmittel (Z, Z`) an einer Verlagerung aus dem Führungskanal heraus sowohl parallel zur Führungsebene (xz-Ebene) als auch quer hierzu gehindert ist.

4. Fensterheberbaugruppe nach einem der vorhergehenden Ansprüche, **dadurch gekennzeichnet, dass** zwischen dem mindestens einen Sicherungselement (2A, 2B) und dem Umlenkstück (1) ein Spalt (s1, s2) vorhanden ist, durch den sich das Zugmittel (Z, Z`) in einem entspannten Entlastungszustand, der zu einem im Betrieb des Fensterhebers bestehenden gespannten Zustand des Zugmittels (Z, Z`) verschieden ist, hindurch erstreckt und ein Zugmittelabschnitt (ZA1, ZA2) des Zugmittels (Z, Z`) in dem entspannten Entlastungszustand durch das mindestens eine Sicherungselement (2A, 2B) in dem Spalt (s1, s2) und durch das mindestens eine Sicherungselement (2A, 2B) in Kombination mit dem mindestens einen Sicherungsabschnitt (11A, 11B; 35A, 35B; 50) in dem Führungskanal (10) gehalten ist.

5. Fensterheberbaugruppe nach einem der vorhergehenden Ansprüche, **dadurch gekennzeichnet, dass** der Führungskanal (10) entlang seiner Erstreckung eine sich ändernde Tiefe aufweist, wobei in wenigstens einem Abschnitt die Tiefe des Führungskanals (10) geringer ist als ein mittlerer Durchmesser des hierin geführten Zugmittels (Z, Z`) und in wenigstens einem weiteren, durch den mindestens ein Sicherungsabschnitt (11A, 11B) berandeten Abschnitt die Tiefe des Führungskanals (10) größer ist als ein mittlerer Durchmesser des hierin geführten Zugmittels (Z, Z`).

6. Fensterheberbaugruppe nach einem der vorhergehenden Ansprüche, **dadurch gekennzeichnet, dass** das mindestens eine Sicherungselement (2A, 2B) (A), bezogen auf eine Erstreckungsrichtung des Führungskanals (10), zu dem mindestens einen Sicherungsabschnitt (11A, 11B; 35A, 35B; 50) versetzt ist und/oder dass an dem Träger (A) mindestens zwei zueinander beabstandete, unterschiedlichen Bereichen des Führungskanals (10) gegenüberliegende Sicherungselemente (2A, 2B) vorgesehen sind.

7. Fensterheberbaugruppe nach einem der vorhergehenden Ansprüche, **dadurch gekennzeichnet, dass** der mindestens eine Sicherungsabschnitt (11A, 11B) an dem Umlenkstück (1) vorgesehen ist.

8. Fensterheberbaugruppe nach Anspruch 7, **dadurch gekennzeichnet, dass** an dem Umlenkstück (1) mindestens zwei zueinander beabstandete, unterschiedliche Bereiche des Führungskanals (10) berandende Sicherungsabschnitte (11A, 11B) vorgesehen sind.

9. Fensterheberbaugruppe nach einem der vorhergehenden Ansprüche, **dadurch gekennzeichnet, dass** das Umlenkstück (1) als separates Bauteil ausgebildet und an dem Träger (A) fixiert ist.

10. Fensterheberbaugruppe nach Anspruch 9, **dadurch gekennzeichnet, dass** das Umlenkstück (1) an mehreren Formschlussbereichen (32, 4A, 4B) des Trägers (A) mit dem Träger (A) formschlüssig verbunden ist.

11. Fensterheberbaugruppe nach Anspruch 10, **dadurch gekennzeichnet, dass** das Umlenkstück (1) mindestens drei Formschlusselemente (12, 13A, 13B, 14A, 14B) zur formschlüssigen Verbindung mit dem Träger (A) aufweist, wobei mindestens zwei endseitige Formschlusselemente (13A, 13B, 14A, 14B) im Bereich jeweils eines Endes des Führungskanals (10) vorgesehen sind und mindestens ein weiteres Formschlusselement (12) vorgesehen ist, das sich entlang des Führungskanals (10) zwischen den endseitigen Formschlusselementen (13A, 13B, 14A, 14B) befindet.

12. Fensterheberbaugruppe nach einem der Ansprüche 9 bis 11, **dadurch gekennzeichnet, dass** das Umlenkstück (1) zu einer parallel zur Führungsebene (xz-Ebene) verlaufenden Achse symmetrisch ausgebildet ist, sodass das Umlenkstück (1) auch um 180° um diese Achse gedreht an dem Träger (A) bestimmungsgemäß anbringbar ist.

13. Fensterheberbaugruppe nach Anspruch 9, **dadurch gekennzeichnet, dass** das separat hergestellte Umlenkstück zumindest teilweise in das Material des Trägers (A) eingebettet ist.

14. Fensterheber zur Verstellung einer Fensterscheibe (S) in einem Fahrzeug, mit einer Fensterheberbaugruppe nach einem der Ansprüche 1 bis 13.

15. Türmodul für eine Fahrzeugtür, mit einer Fensterheberbaugruppe nach einem der Ansprüche 1 bis 13.

## Claims

1. A window lifter assembly for a window lifter provided for the adjustment of a window pane (S), comprising
- a carrier (A),
- a flexible traction means (Z, Z') for the transmission of an adjusting force for the adjustment of the window pane (S), and
- a deflection piece (1) that is non-rotatably arranged on the carrier (A) and includes a guide channel (10) for the deflection of the traction means (Z, Z') in a guide plane (xz-plane),
wherein
- the deflection piece (1) is made of a polyaryl ether plastic and
- for holding the traction means (Z, Z') in the guide channel (10) at least one securing element (2A, 2B) on the carrier (A) and at least one securing portion (11A, 11B; 35A, 35B; 50) are provided, wherein
- the at least one securing element (2A, 2B) extends in a spatial direction (-y) that is substantially perpendicular to the guide plane (xz-plane) and faces the guide channel (10) of the deflection piece (1),
- the at least one securing portion (11A, 11B; 35A, 35B; 50) protrudes from an edge of the guide channel (10) in a spatial direction (-z) that extends substantially parallel to the guide plane (xz-plane), and
- the at least one securing element (2A, 2B) and the at least one securing portion (11A, 11B; 35A, 35B; 50) are formed and arranged relative to each other such that when traction means portions (ZA1, ZA2) of the traction means (Z, Z') are displaced out of the guide channel (10) in the direction of the securing element (2A, 2B) and the traction means (Z, Z') hence abuts against the securing element (2A, 2B), the securing portion (11A, 11B; 35A, 35B; 50) still blocks the traction means (Z, Z') against a displacement transversely to the guide plane (xz-plane) out of the guide channel (10).

2. The window lifter assembly according to claim 1, **characterized in that** the deflection piece (1) is made of PEEK.

3. The window lifter assembly according to claim 1 or 2, **characterized in that** the at least one securing element (2A, 2B) and the at least one securing portion (11A, 11B; 35A, 35B; 50) are adjusted to each other and to the traction means (Z, Z') such that via the at least one securing element (2A, 2B) and the at least one securing portion (11A, 11B; 35A, 35B; 50) the traction means (Z, Z') is prevented from being displaced out of the guide channel both parallel to the guide plane (xz-plane) and transversely thereto.

4. The window lifter assembly according to any of the preceding claims, **characterized in that** between the at least one securing element (2A, 2B) and the deflection piece (1) a gap (s1, s2) is present, through which the traction means (Z, Z') extends in a relaxed state of relief, which is different from a tensioned condition of the traction means (Z, Z') existing in operation of the window lifter, and in the relaxed state of relief a traction means portion (ZA1, ZA2) of the traction means (Z, Z') is held in the gap (s1, s2) by the at least one securing element (2A, 2B) and in the guide channel (10) by the at least one securing element (2A, 2B) in combination with the at least one securing portion (11A, 11B; 35A, 35B; 50).

5. The window lifter assembly according to any of the preceding claims, **characterized in that** the guide channel (10) has a varying depth along its extension, wherein in at least one portion the depth of the guide channel (10) is less than a mean diameter of the traction means (Z, Z') guided therein and in at least one further portion bordered by the at least one securing portion (11A, 11B) the depth of the guide channel (10) is greater than a mean diameter of the traction means (Z, Z') guided therein.

6. The window lifter assembly according to any of the preceding claims, **characterized in that** the at least one securing element (2A, 2B), based on a direction of extension of the guide channel (10), is offset from the at least one securing portion (11A, 11B; 35A, 35B; 50), and/or on the carrier (A) at least two securing elements (2A, 2B) spaced apart from each other and facing different regions of the guide channel (10) are provided.

7. The window lifter assembly according to any of the preceding claims, **characterized in that** the at least one securing portion (11A, 11B) is provided on the deflection piece (1).

8. The window lifter assembly according to claim 7, **characterized in that** on the deflection piece (1) at least two securing portions (11A, 11B) spaced apart from each other and bordering different regions of the guide channel (10) are provided.

9. The window lifter assembly according to any of the preceding claims, **characterized in that** the deflection piece (1) is formed as a separate component and fixed to the carrier (A).

10. The window lifter assembly according to claim 9, **characterized in that** on several form-fit regions (32, 4A, 4B) of the carrier (A) the deflection piece (1) is positively connected to the carrier (A).

11. The window lifter assembly according to claim 10, **characterized in that** the deflection piece (1) includes at least three form-fit elements (12, 13A, 13B, 14A, 14B) for the positive connection with the carrier (A), wherein at least two end-side form-fit elements (13A, 13B, 14A, 14B) are provided each in the region of an end of the guide channel (10) and at least one further form-fit element (12) is provided, which is disposed between the end-side form-fit elements (13A, 13B, 14A, 14B) along the guide channel (10).

12. The window lifter assembly according to any of claims 9 to 11, **characterized in that** the deflection piece (1) is formed symmetrically to an axis extending parallel to the guide plane (xz-plane) so that the deflection piece (1) rotated about this axis by 180° can also be properly mounted on the carrier (A).

13. The window lifter assembly according to claim 9, **characterized in that** the separately manufactured deflection piece is at least partly embedded into the material of the carrier (A).

14. A window lifter for the adjustment of a window pane (S) in a vehicle, comprising a window lifter assembly according to any of claims 1 to 13.

15. A door module for a vehicle door, comprising a window lifter assembly according to any of claims 1 to 13.

## Revendications

1. Ensemble lève-vitre pour un lève-vitre prévu pour le réglage d'une vitre (S), avec
- un support (A),
- un moyen de traction (Z, Z') flexible pour la transmission d'une force de réglage pour le réglage de la vitre (S) et
- une pièce de renvoi (1) qui est agencée de manière non rotative au niveau du support (A) et présente un canal de guidage (10) pour la déviation du moyen de traction (Z, Z') dans un plan de guidage (plan xz),
dans lequel
- la pièce de renvoi (1) se compose d'une matière plastique de polyaryléther et
- pour le maintien du moyen de traction (Z, Z') dans le canal de guidage (10) au moins un élément de fixation (2A, 2B) au niveau du support (A) et au moins une section de fixation (11A, 11B ; 35A, 35B ; 50) sont prévus, dans lequel
-- l'au moins un élément de fixation (2A, 2B) s'étend dans un sens spatial (-y) qui s'étend sensiblement perpendiculairement au plan de guidage (plan xz), et s'oppose au canal de guidage (10) de la pièce de renvoi (1),
-- l'au moins une section de fixation (11A, 11B ; 35A, 35B ; 50) fait saillie dans un sens spatial (-z) qui s'étend sensiblement parallèlement au plan de guidage (plan xz), au niveau d'un bord du canal de guidage (10), et
-- les au moins deux éléments de fixation (2A, 2B) et l'au moins une section de fixation (11A, 11B ; 35A, 35B ; 50) sont réalisés et sont agencés les uns par rapport aux autres de telle manière que pour des sections de moyen de traction (ZA1, ZA2), déplacées du canal de guidage (10) en direction de l'élément de fixation (2A, 2B), du moyen de traction (Z, Z') et un appui en résultant du moyen de traction (Z, Z') contre l'élément de fixation (2A, 2B), la section de fixation (11A, 11B ; 35A, 35B ; 50) bloque en outre le moyen de traction (Z, Z') contre un déplacement transversalement au plan de guidage (plan xz) hors du canal de guidage (10).

2. Ensemble lève-vitre selon la revendication 1, **caractérisé en ce que** la pièce de renvoi (1) se compose de PEEK.

3. Ensemble lève-vitre selon la revendication 1 ou 2, **caractérisé en ce que** l'au moins un élément de fixation (2A, 2B) et l'au moins une section de fixation (11A, 11B; 35A, 35B ; 50) sont adaptés les uns aux autres et au moyen de traction (Z, Z') de telle manière que par l'au moins un élément de fixation (2A, 2B) et l'au moins une section de fixation (11A, 11B ; 35A, 35B ; 50) le moyen de traction (Z, Z') soit empêché de se déplacer hors du canal de guidage non seulement parallèlement au plan de guidage (plan xz) mais aussi transversalement à celui-ci.

4. Ensemble lève-vitre selon l'une des revendications précédentes, **caractérisé en ce qu'**entre l'au moins un élément de fixation (2A, 2B) et la pièce de renvoi (1), une fente (s1, s2) est présente, à travers laquelle le moyen de traction (Z, Z') s'étend dans un état de détente desserré qui est différent d'un état serré existant en fonctionnement du lève-vitre du moyen de traction (Z, Z') et une section de moyen de traction (ZA1, ZA2) du moyen de traction (Z, Z') est maintenue dans l'état de détente desserré par l'au moins un élément de fixation (2A, 2B) dans la fente (s1, s2) et par l'au moins un élément de fixation (2A, 2B) en combinaison avec l'au moins une section de fixation (11A, 11B ; 35A, 35B ; 50) dans le canal de guidage (10).

5. Ensemble lève-vitre selon l'une des revendications précédentes, **caractérisé en ce que** le canal de guidage (10) présente le long de son étendue une profondeur se modifiant, dans lequel dans au moins une section la profondeur du canal de guidage (10) est plus petite qu'un diamètre médian du moyen de traction (Z, Z') guidé dedans et dans au moins une autre section délimitée par l'au moins une section de fixation (11A, 11B) la profondeur du canal de guidage (10) est plus grande qu'un diamètre médian du moyen de traction (Z, Z') guidé dedans.

6. Ensemble lève-vitre selon l'une des revendications précédentes, **caractérisé en ce que** l'au moins un élément de fixation (2A, 2B) (A) est en déport, en ce qui concerne un sens d'étendue du canal de guidage (10), par rapport à l'au moins une section de fixation (11A, 11B ; 35A, 35B ; 50), et/ou qu'au moins deux éléments de fixation (2A, 2B) faisant face à deux zones du canal de guidage (10) différentes espacées l'une par rapport à l'autre sont prévus au niveau du support (A).

7. Ensemble lève-vitre selon l'une des revendications précédentes, **caractérisé en ce que** l'au moins une section de fixation (11A, 11B) est prévue au niveau de la pièce de renvoi (1).

8. Ensemble lève-vitre selon la revendication 7, **caractérisé en ce qu'**au moins deux sections de fixation (11A, 11B) espacées l'une de l'autre, délimitant différentes zones du canal de guidage (10) sont prévues au niveau de la pièce de renvoi (1).

9. Ensemble lève-vitre selon l'une des revendications précédentes, **caractérisé en ce que** la pièce de renvoi (1) est réalisée en tant que composant séparé et est fixée au support (A).

10. Ensemble lève-vitre selon la revendication 9, **caractérisé en ce que** la pièce de renvoi (1) est reliée à complémentarité de formes au niveau de plusieurs zones à complémentarité de formes (32, 4A, 4B) du support (A) au support (A).

11. Ensemble lève-vitre selon la revendication 10, **caractérisé en ce que** la pièce de renvoi (1) présente au moins trois éléments à complémentarité de formes (12, 13A, 13B, 14A, 14B) pour la liaison à complémentarité de formes avec le support (A), dans lequel au moins deux éléments à complémentarité de formes (13A, 13B, 14A, 14B) côté extrémité sont prévus dans la zone respectivement d'une extrémité du canal de guidage (10) et au moins un autre élément à complémentarité de formes (12) est prévu, lequel se trouve le long du canal de guidage (10) entre les éléments à complémentarité de formes (13A, 13B, 14A, 14B) côté extrémité.

12. Ensemble lève-vitre selon l'une des revendications 9 à 11, **caractérisé en ce que** la pièce de renvoi (1) est réalisée de manière symétrique par rapport à un axe s'étendant parallèlement au plan de guidage (plan xz) si bien que la pièce de renvoi (1) peut être installée conformément à l'usage prévu au niveau du support (A) de manière tournée également de 180° autour dudit axe.

13. Ensemble lève-vitre selon la revendication 9, **caractérisé en ce que** la pièce de renvoi fabriquée séparément est intégrée au moins en partie dans le matériau du support (A).

14. Lève-vitre pour le réglage d'une vitre (S) dans un véhicule, avec un ensemble lève-vitre selon l'une des revendications 1 à 13.

15. Module de porte pour une porte de véhicule, avec un ensemble lève-vitre selon l'une des revendications 1 à 13.
